# EUROPÄISCHE PATENTSCHRIFT

(11) **EP 3 739 308 B1**
(45) Veröffentlichungstag und Bekanntmachung des Hinweises auf die Patenterteilung: **19.01.2022**
(21) Anmeldenummer: 20174873.8
(22) Anmeldetag: 15.05.2020
(51) Int. Cl.: G01H 1/00

(54) **VORRICHTUNG ZUM ERFASSEN MECHANISCHER SCHWINGUNGEN**
MECHANICAL VIBRATION DETECTING DEVICE
DISPOSITIF DE DÉTECTION DES VIBRATIONS MÉCANIQUES

(30) Priorität: 16.05.2019 DE 102019207168
(43) Veröffentlichungstag der Anmeldung: 18.11.2020
(73) Patentinhaber: Prüftechnik Dieter Busch GmbH, 85737 Ismaning (DE)
(72) Erfinder: Göhlich, Horst, 81475 München (DE)

(56) Entgegenhaltungen:
- WO-A1-2011/104433
- WO-A1-2014/148657
- US-A1- 2018 071 889

## Beschreibung

Die vorliegende Erfindung betrifft eine Vorrichtung zum Erfassen mechanischer Schwingungen von Messobjekten, die hierfür an Messobjekten anbringbar ist, mit einem Gehäuse, wenigstens einem Schwingungserfassungselement und Stromquellen, wobei das Schwingungserfassungselement und die Stromquellen innerhalb des Gehäuses angeordnet sind.

Eine derartige Vorrichtung ist beispielsweise aus der US 9,921,136 B2 bekannt. Um eine möglichst direkte Übertragung von Vibrationen des Messobjektes auf das Schwingungserfassungselement der Vorrichtung zu gewährleisten, ist das Schwingungserfassungselement in einem unteren Teil der Vorrichtung angeordnet, so dass es während der Messung möglichst nahe an den Messobjekten positioniert ist. Eine als Stromquelle für die Vorrichtung vorgesehene Batterie ist direkt oberhalb des Schwingungserfassungselementes angeordnet.

Eine weitere Schwingungserfassungsvorrichtung offenbart die US 8,640,545 B2. Auch bei dieser Schwingungserfassungsvorrichtung ist das Schwingungserfassungselement in einem unteren Teil der Vorrichtung angeordnet während sich die Stromquelle direkt über dem Schwingungserfassungselement der Schwingungserfassungsvorrichtung befindet.

Darüber hinaus ist eine Schwingungserfassungsvorrichtung mit einem Schwingungserfassungselement und Stromquellen auch aus der US 9,791,310 B2 bekannt, wobei die Stromquellen bei der Schwingungserfassungsvorrichtung in einigem Abstand über dem Schwingungserfassungselement positioniert sind.

Hingegen betriff die DE 10 2014 205 922 A1 ein Modul zum Erfassen eines Vibrationsverhaltens einer mechanischen Komponente mit einem Befestigungsbauteil. Das Modul ist derart ausgebildet, dass es mit der Komponente mechanisch starr verbunden werden kann, um eine mechanische Schwingung der Komponente aufzunehmen.

Die WO 2014/148657 A1 offenbart eine Vorrichtung zum Erfassen mechanischer Schwingungen von Messobjekten, die hierfür mittels eines Anlagemittels an den Messobjekten anbringbar ist. Bei der Vorrichtung ist innerhalb eines Gehäuses ein Schwingungssensormodul angeordnet. Zwischen dem Anlagemittel und dem Schwingungssensormodul erstrecken sich Stromquellen im Gehäuse. Ferner ist an einer Außenfläche des Anlagemittels ein Schwingungserfassungssensor vorgesehen. Ein Schwingungsübertragungselement ist vom Schwingungserfassungssensor zum Schwingungssensormodul zwischen den Stromquellen hindurch geführt.

Aus der US 2018/0071889 A1 ist eine Poliervorrichtung mit einem Trägerkopf bekannt, mit dem ein Substrat gegen eine Polierfläche gedrückt wird. Der Trägerkopf weist Sensoranordnungen auf, die in einem Kanal des Trägerkopfs angeordnet sind und von denen jede ein Übertragungselement, einen Sensor, Batterien und eine Antenne umfasst. Das Übertragungselement weist zwei einander endgegengesetzte Enden auf von denen eines mit der Antenne und das andere mit dem Sensor verbunden ist. Dabei sind die Batterien um das Übertragungselement herum angeordnet.

Eine an Messobjekten anbringbare Sensorvorrichtung zeigt die WO 2011/104433 A1. Dabei sind im Inneren eines Gehäuses Stromquellen angeordnet. In einem Raum wischen diesen Stromquellen ist eine Leiterplatte von MEMS-Beschleunigungssensoren angeordnet.

Bei Vibrationssensoren, Schwingungssensoren oder ganz allgemein bei Vorrichtungen zum Erfassen mechanischer Schwingungen von Messobjekten ist es in der Regel wünschenswert, wenn sich diese durch ein möglichst lineares Erfassen oder Messen mechanischer Schwingungen auszeichnen, wobei sich ein in Abhängigkeit erfasster Schwingungen erzeugtes Ausgangssignal linear von der Amplitude oder Frequenz der erfassten Schwingung ändert. Für eine solche lineare Messcharakteristik des Vibrations- oder Schwingungssensors oder der Vorrichtung bedarf es wiederum eines möglichst ungestörten Schwingverhaltens der Vorrichtung bzw. des Vibrations- oder Schwingungssensors insgesamt sowie einer möglichst nahen Anordnung des Schwingungserfassungselements der Vorrichtung oder des Sensors an dem Messobjekt. Der Schwingungssensor oder das Schwingungserfassungselement muss zudem eine möglichst starre Kopplung an das Messobjekt erfahren, um die Schwingung des Messobjekts ohne Störungen messen zu können. Eine geringe Masse des Schwingungserfassungselements sorgt dafür, dass seine Eigenresonanzen außerhalb des gewünschten Messbereichs liegen. Aus diesen Gründen weisen Vorrichtungen zum Erfassen mechanischer Schwingungen von Messobjekten möglichst kleine Abmessungen auf und haben eine geringe Masse. Andererseits erfordern intelligente Schwingungssensoren im Rahmen des sogenannten Internets der Dinge (Internet of Things, loT) eine eigenständige Stromversorgung, da sie möglichst drahtlos betrieben werden sollen. Die dafür notwendigen Stromquellen sind jedoch vergleichsweise groß und schwer und verschlechtern deswegen das Eigenschwingverhalten der Vorrichtung.

Es ist die Aufgabe der vorliegenden Erfindung, eine Vorrichtung zum Erfassen mechanischer Schwingungen von Messobjekten mit eigenständiger Stromversorgung zu schaffen, deren Schwingverhalten gegenüber bekannten Vorrichtungen verbessert ist.

Diese Aufgabe wird durch die Vorrichtung mit den Merkmalen des Anspruchs 1 gelöst. Bevorzugte Ausführungsbeispiele sind Gegenstand der abhängigen Ansprüche.

Gemäß der vorliegenden Erfindung weist die Vorrichtung wenigstens zwei Stromquellen auf, die entlang wenigstens eines Kreises um das Schwingungserfassungselement herum angeordnet sind, wobei zwischen benachbarten Stromquellen desselben Kreises jeweils gleiche Winkelabstände vorgesehen sind. Mit anderen Worten sind die entlang eines Kreises angeordneten Stromquellen gleichförmig oder symmetrisch um das Schwingungserfassungselement herum verteilt, wobei das Schwingungserfassungselement im Mittelpunkt des Kreises positioniert ist, auf dem die Stromquellen angeordnet sind. Im Falle von Stromquellen, die entlang mehrerer Kreise um das Schwingungserfassungselement herum angeordnet sind, sind die Kreise zueinander konzentrisch und das Schwingungserfassungselement befindet sich in deren gemeinsamem Mittelpunkt. Aufgrund dessen sind bei der erfindungsgemäßen Vorrichtung das Schwingungserfassungselement und die Stromquellen entlang einer Längsachse der Vorrichtung im Wesentlichen auf der gleichen oder auf vergleichbarer Höhe positioniert. Mit anderen Worten überlappt sich in Normalenrichtungen zur Längsachse der Vorrichtung oder zu einer Längsachse des Schwingungserfassungselements jede der Stromquellen wenigstens teilweise oder abschnittsweise mit dem Schwingungserfassungselement. Bei den sich überlappenden Abschnitten handelt es sich in der Regel um während der Schwingungsmessung dem Messobjekt zugewandte Endabschnitte jeder Stromquelle sowie um einen während der Schwingungsmessung von dem Messobjekt abgewandten Endabschnitt des Schwingungserfassungselementes. Nach Anbringen der Vorrichtung an einem Messobjekt sind dem Messobjekt zugewandte Oberflächen der Stromquellen somit weniger weit vom Messobjekt beabstandet als eine vom Messobjekt abgewandte Oberfläche des Schwingungserfassungselementes. Insbesondere ist eine Konfiguration der Vorrichtung möglich, bei welcher nach Anbringen der Vorrichtung an einem Messobjekt dem Messobjekt zugewandte Oberflächen der Stromquellen und eine dem Messobjekt zugewandte Oberfläche des Schwingungserfassungselementes gleich weit vom Messobjekt beabstandet sind bzw. bei welcher die zuvor genannten Oberflächen der Stromquellen und des Schwingungserfassungselementes in Normalenrichtung zur Längsachse der Vorrichtung miteinander fluchten.

Dabei kann die Vorrichtung durchaus auch mehr als zwei Stromquellen, beispielsweise drei, vier, fünf, sechs oder noch mehr Stromquellen, aufweisen, solange dieselben symmetrisch um das Schwingungserfassungselement herum verteilt sind. Bevorzugt sind die Stromquellen von länglicher Form bzw. sie weisen jeweilige Längsachsen auf, die zur Längsachse oder Mittelachse der Vorrichtung parallel ausgerichtet sind.

Anders als bei bekannten Vorrichtungen zur Schwingungs- oder Vibrationsmessung bedingt die spezifische symmetrische Anordnung der Stromquellen um das Schwingungserfassungselement bei der erfindungsgemäßen Vorrichtung, dass der Schwerpunkt der zumeist relativ schweren und im Vergleich zum Schwingungserfassungselement großen Stromquellen nicht vom Schwingungserfassungselement weg sondern im Gegenteil zu diesem hin verlagert ist. Diese Verlagerung des Schwerpunktes der das Volumen und das Gewicht der gesamten Vorrichtung beeinflussenden Stromquellen zum Schwingungserfassungselement hin führt zu einer deutlichen Verbesserung des gewünschten Schwingverhaltens der Vorrichtung. Insbesondere werden durch diese Anordnung Kippschwingungen des relativ hohen Gehäuses vermindert, die bei bekannten Vibrationssensoren häufig auftreten und die das vom Vibrationssensor gelieferte Messergebnis verfälschend von dessen Schwingungserfassungselement mit erfasst werden. Zudem werden bei der erfindungsgemäßen Vorrichtung diverse quer- und Längseigenmoden unterdrückt, die durch Schwingungen des Messobjektes, bei dem es sich in der Praxis zumeist um eine Maschine handelt, angeregt werden und die zu einem nichtlinearen Messverhalten der Vorrichtung führen. Eine dieser Eigenfrequenzen kann beispielsweise infolge des Flüssigkeitselektrolyten der Stromquellen bedingt sein, da Stromquellen wie zum Beispiel Batterien nicht vollständig mit Elektrolyten aufgefüllt sind und der flüssige Elektrolyt im Gehäuse der Stromquelle hin- und herschwingt. Infolge des verbesserten Schwingverhaltens der erfindungsgemäßen Vorrichtung aufgrund ihres symmetrischen Aufbaus ist somit die Frequenzlinearität der Vorrichtung stark verbessert. Zusammenfassend zeichnet sich die Vorrichtung der vorliegenden Erfindung also durch einen symmetrischen Aufbau aus, der sich günstig auf das Schwingverhalten der Vorrichtung auswirkt und der damit auch das lineare Messverhalten der Vorrichtung selbst dann begünstigt, wenn die Vorrichtung sehr klein und leicht dimensioniert ist.

In der Regel stehen die Stromquellen und alle anderen Teile der Vorrichtung, die vom Schwingungserfassungselement mechanisch entkoppelt sein müssen, wie zum Beispiel Platinen oder das Gehäuse, mit dem Schwingungserfassungselement nicht in mechanischem Kontakt und sind von diesem beabstandet, damit messverfälschende Schwingungen der Stromquellen nicht direkt auf das Schwingungserfassungselement übertragen werden können. Aus ganz ähnlichen Gründen sind bei einer vorteilhaften Ausführungsform der Erfindung die Stromquellen und das Gehäuse zueinander kontaktfrei, d.h. die Stromquellen und das Gehäuse stehen nicht miteinander in Kontakt bzw. die Stromquellen und das Gehäuse berühren sich an keiner Stelle. Infolge der berührungs- oder kontaktfreien Anordnung von Stromquellen und Gehäuse, was letztendlich eine räumliche Trennung oder Beabstandung der Stromquellen vom Gehäuse bedeutet, kann eine Übertragung der oben beschriebenen Schwingungen der Stromquellen auf das Gehäuse und über dieses auf das Schwingungserfassungselement reduziert werden.

Bevorzugt weist die Vorrichtung wenigstens einen Dämpfungskörper zur Schwingungsdämpfung der Stromquellen auf. Bei diesem Dämpfungskörper kann es sich beispielsweise um einen Schaumstoff handeln, mit dem die Stromquellen ummantelt sind bzw. in den die Stromquellen eingesteckt sind. Von einem solchen Schaumstoff ummantelte oder in einen solchen Schaumstoffkörper eingesteckte Stromquellen werden vom Schaumstoff davor bewahrt, das Gehäuse an irgendeiner Stelle zu berühren bzw. mit dem Gehäuse in Kontakt zu treten. Entsprechend können mit Ausnahme des Schwingungserfassungselements auch Schwingungen aller anderen Teile der Vorrichtung, die innerhalb des Gehäuses angeordnet sind, wie zum Beispiel Platinen, mittels eines derartigen Schaumstoffes oder Schaumstoffkörpers gedämpft werden und ein Kontakt dieser Teile mit dem Gehäuse kann mit einem derartigen Schaumstoff oder Schaumstoffkörper unterbunden werden. Dabei kann der Dämpfungskörper den Raum im Inneren des Gehäuses um die darin angeordneten Teile nahezu gänzlich oder vollständig ausfüllen.

Vorteilhafterweise weist das Gehäuse eine Anlagefläche auf, mit der die Vorrichtung auf Oberflächen der Messobjekte anlegbar ist. Diese Anlagefläche kann plan oder gewölbt sein. Ganz allgemein kann die Anlagefläche entsprechend der Form der Oberfläche des Messobjektes, an welcher die Vorrichtung angebracht werden soll, ausgebildet sein, um ein möglichst sicheres und flächiges Anlegen der Vorrichtung an dem Messobjekt zu ermöglichen.

Besonders vorteilhaft weisen Vorrichtungen mit einer derartigen Anlagefläche wenigstens ein Dämpfungselement auf, wobei wenigstens ein Teil der Anlagefläche durch eine Oberfläche des Dämpfungselements gebildet ist. Ganz besonders vorteilhaft ist die gesamte Anlagefläche durch die Oberfläche des Dämpfungselements gebildet. In solchen Fällen kommt das Gehäuse ausschließlich über das Dämpfungselement in Kontakt mit dem Messobjekt. Beispielsweise kann es sich bei dem Dämpfungselement um eine Gummimembran handeln. Mit einem derartigen Dämpfungselement kann nicht nur die Übertragung von Schwingungen auf das Gehäuse verhindert werden. Es kann darüber hinaus verhindert werden, dass sich Gehäuseschwingungen über den Umweg der Anregung von Schwingungen des Messobjektes auf das Schwingungserfassungselement übertragen.

Vorteilhafterweise ist das Schwingungserfassungselement mit Messobjekten verbindbar, und insbesondere lösbar mit Messobjekten verbindbar. Zu diesem Zweck kann das das Schwingungserfassungselement mit einem Gewinde versehen sein, welches ein lösbares Verbinden des Schwingungserfassungselementes mit dem Messobjekt an einer dafür vorgesehenen Stelle erlaubt. Ein mit dem Messobjekt verbundenes Schwingungserfassungselement ist nicht nur möglichst nahe am Messobjekt angeordnet, sondern es steht mit diesem auch in direktem Kontakt und ist fest an das Messobjekt angekoppelt. Die Übertragung von Schwingungen des Messobjektes an das Schwingungserfassungselement ist in solchen Fällen direkt und besonders günstig und ungestört. Ferner kann das Schwingungserfassungselement mittels Kleben und/oder mittels eines oder mehreren Magneten mit Messobjekten verbunden werden.

Bei einer bevorzugten Ausführungsform der Vorrichtung ist wenigstens ein Dämpfungsmittel vorgesehen, das am Schwingungserfassungselement anliegt.

Mithin kann das Dämpfungsmittel zwischen dem Schwingungserfassungselement und dem Gehäuse angeordnet sein. Infolge des Dämpfungsmittels ist die direkte Übertragung von Gehäuseschwingungen auf das Schwingungserfassungselement verringert oder gar verhindert. Wie beim oben genannten Dämpfungselement kann es sich auch bei dem Dämpfungsmittel um eine Gummimembran handeln. Insbesondere kann für das Dämpfungselement wie für das Dämpfungsmittel ein und dieselbe Gummimembran vorgesehen sein, wobei ein erster Abschnitt der Gummimembran die Funktion des Dämpfungsmittels erfüllt und ein zweiter Abschnitt die Funktion des Dämpfungselements. Zudem kann dieser erste Abschnitt zum Halten des Schwingungserfassungselements im Gehäuse ausgebildet sein.

Vorzugsweise ist wenigstens eine der Stromquellen wieder aufladbar und/oder eine Batterie und/oder eine Lithiumbatterie. Wieder aufladbare Stromquellen wie zum Beispiel Akkumulatoren zeichnen sich durch ihre Wiederverwendbarkeit aus, während Batterien und insbesondere Lithiumbatterien langlebiger und energiereicher sind als Akkumulatoren. Dabei können alle Stromquellen der Vorrichtung grundsätzlich verschiedenartig sein. Für den Betrieb der Vorrichtung ist es allerdings günstiger, wenn alle Stromquellen der Vorrichtung von derselben Art sind. Beispielsweise können alle Stromquellen der Vorrichtung Batterien oder Lithiumbatterien sein, oder alle Stromquellen der Vorrichtung können Akkumulatoren sein.

Grundsätzlich kann es sich bei dem Schwingungserfassungselement um ein beliebiges Schwingungserfassungselement handeln. So kann es sich bei dem Schwingungserfassungselement um ein Piezoelement und/oder um einen MEMS-Schwingungsaufnehmer (MEMS: Micro-Electro-Mechanical-System) handeln.

Darüber hinaus weist die Vorrichtung vorteilhaft wenigstens eine Datenübertragungsschnittstelle und/oder wenigstens einen Datenspeicher und/oder wenigstens eine Steuereinheit und/oder wenigstens eine Signalverarbeitungseinheit und/oder wenigstens einen Sensor auf. Bei der Datenübertragungsschnittstelle kann es sich um eine Schnittstelle zur kabelgebundenen oder zur drahtlosen Übertragung von Daten, beispielsweise von Messdaten handeln, die von der Vorrichtung erfasst worden sind. Zudem können über die Datenübertragungsschnittstelle Daten wie zum Beispiel Steuerdaten von der Vorrichtung empfangen werden. Ein Datenspeicher kann zur temporären Speicherung der Messdaten oder von empfangenen Daten von Vorteil sein. Weist die Vorrichtung hingegen eine Steuereinheit auf, so können Funktionen der Vorrichtung zumindest partiell autonom und ohne äußeren Einfluss oder extern empfangene Steuerdaten von der Vorrichtung selbst gesteuert werden. Mittels einer Signalverarbeitungseinheit lassen sich vom Schwingungserfassungselement erfasste Schwingungen bzw. Vibrationen bzw. Schwingungssignale bereits in der Vorrichtung selbst verarbeiten oder zumindest vorverarbeiten. Sofern die Vorrichtung zudem einen Sensor aufweist, können mit diesem weitere physikalische Größen, wie zum Beispiel die Temperatur, erfasst oder gemessen werden.

Nachfolgend wird die Erfindung anhand von bevorzugten Ausführungsbeispielen unter Zuhilfenahme von Figuren näher beschrieben. Dabei zeigen:
- Figur 1: einen Querschnitt durch eine Vorrichtung zum Erfassen mechanischer Schwingungen von Messobjekten;
- Figur 2: einen Schnitt durch die Vorrichtung der Figur 1 entlang der in der Figur 1 gezeigten gestrichelten Linie;
- Figur 3: eine Vorrichtung zum Erfassen mechanischer Schwingungen von Messobjekten mit zwei Stromquellen;
- Figur 4: eine Vorrichtung zum Erfassen mechanischer Schwingungen von Messobjekten mit vier Stromquellen;
- Figur 5: eine Vorrichtung mit entlang zweier Kreise angeordneten Stromquellen;
- Figur 6: eine weitere Vorrichtung mit entlang zweier Kreise angeordneten Stromquellen.

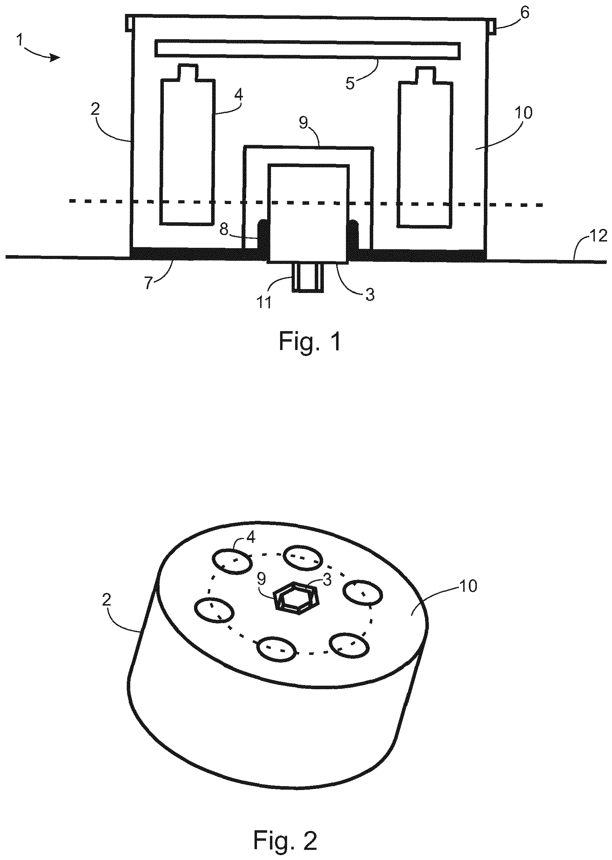

Eine Vorrichtung zum Erfassen mechanischer Schwingungen oder ein Vibrationssensor 1 ist in der Figur 1 im Querschnitt zu sehen. Aus Gründen der Übersichtlichkeit ist der Vibrationssensor 1 schematisch und nicht maßstabsgetreu dargestellt.

Der Vibrationssensor 1 weist ein Gehäuse 2, ein Schwingungserfassungselement 3, insgesamt sechs Stromquellen 4 und eine Leiterplatine 5 auf. Auf der Leiterplatine können verschiedene in der Figur 1 nicht näher dargestellte elektronische Komponente angeordnet sein, die der Vibrationssensor 1 für seinen Betrieb benötigt, wie zum Beispiel eine Steuereinheit, ein Datenspeicher oder eine Datenübertragungsschnittstelle.

Das Gehäuse 2 ist im Wesentlichen von hohlzylindrischer Form. Eine Seite des Gehäuses 2 ist von einem Deckel 6 verschlossen. Hingegen wird die vom Deckel 6 abgewandte Seite des Gehäuses 2 von einer Gummimembran 7 überspannt. Eine Außenfläche der Gummimembran 7 ist dabei als Anlagefläche des Gehäuses 2 vorgesehen, mit der das Gehäuse 2 und damit der Vibrationssensor 1 als solcher an Oberflächen von Messobjekten anlegbar oder anbringbar ist.

Die Gummimembran 7 weist in ihrer Mitte eine Öffnung auf, innerhalb der das Schwingungserfassungselement 3 sich ins Innere des Gehäuses 2 erstreckend angeordnet ist. Ein die Öffnung umgebender Randabschnitt 8 der Gummimembran 7 ist dabei ins Innere des Gehäuses 2 gestülpt und liegt umfänglich am Schwingungserfassungselement 3 an.

Ebenfalls im Inneren des Gehäuses 2 befinden sich die Stromquellen 4 sowie die Leiterplatine 5. Mit Ausnahme einer Ausnehmung 9, innerhalb der das Schwingungserfassungselement 3 und der Randabschnitt 8 angeordnet sind, ist der Innenraum der Gehäuses 2 vollständig mit einem Schaumstoff 10 ausgefüllt.

Außerhalb des Innenraumes ist ein Gewindeabschnitt 11 am Schwingungserfassungselement 3 ausgebildet.

Zur Messung von Schwingungen oder Vibrationen eines Messobjektes mit dem Vibrationssensor 1 wird derselbe an dem jeweiligen Messobjekt angebracht. In der Figur 1 ist der Vibrationssensor 1 zur Messung von Schwingungen oder Vibrationen einer Maschine 12 als Messobjekt an derselben angebracht, wobei der Gewindeabschnitt 11 an einer dafür vorgesehenen Stelle in die Maschine 12 eingeschraubt oder mit der Maschine 12 verschraubt ist. Dabei gelangt sowohl das Schwingungserfassungselement 3 in direkte Anlage an einer Oberfläche der Maschine 12 als auch die Außenfläche der Gummimembran 7, welche die Anlagefläche des Gehäuses 2 bildet. Um ein Abheben des Gehäuses 2 von der Oberfläche der Maschine 12 zu verhindern, ist eine feste Verbindung des Gehäuses 2 mit der Maschine 12 vorteilhaft. Zu diesem Zweck kann der Vibrationssensor 1 über Magnete verfügen oder es kann eine Klebung oder Klebeverbindung zwischen der Anlagefläche des Gehäuses 2 und der Maschine 12 ausgebildet sein. Nach erfolgter Messung von Schwingungen oder Vibrationen der Maschine 12 kann der Vibrationssensor 1 wieder von der Maschine 12 abgeschraubt und von dieser entfernt werden.

Infolge des direkten Kontaktes des Schwingungserfassungselementes 3 mit der Maschine 12 während der Messung sowie der festen oder starren Verbindung mit der oder Anbindung an die Maschine 12 werden Schwingungen und Vibrationen der Maschine 12 unmittelbar an das Schwingungserfassungselement 3 übertragen und können von diesem erfasst oder gemessen werden. Die Übertragung von Schwingungen und Vibrationen der Maschine 12 an das Gehäuse 2 wird zwar durch die Gummimembran 7 gedämpft, über die das Gehäuse 2 nur leicht bzw. weich an die Maschine 12 und an das Schwingungserfassungselement 3 gekoppelt ist. Allerdings kann eine Schwingungsübertragung an das Gehäuse 2 dennoch in der Regel nicht vollständig unterbunden werden. Eine Dämpfung von an das Gehäuse 2 übertragenen Schwingungen erfolgt durch den Schaumstoff 10, der den Innenraum des Gehäuses 2 ausfüllt. Durch diesen sind alle innenliegenden harten Teile des Vibrationssensors 1 wie die Stromquellen 4 und die Leiterplatine 5 mechanisch stark vom Gehäuse 2 und der Maschine 12 entkoppelt.

Trotz der Gummimembran 7 und des Schaumstoffs 10 kann dennoch ein letzter Rest der Maschinenschwingungen zu den Stromquellen 4 durchdringen und diese zum Schwingen anregen. Da die Stromquellen 4 im Vergleich zum Schwingungserfassungselement 3 große Abmessungen und auch eine große Masse haben und womöglich mit einem flüssigen Elektrolyten befüllt sind, der innerhalb der Stromquellen 4 hin und her schwappt, können sich die Schwingungen der Stromquellen 4 auf die Messung des Schwingungserfassungselementes 3 ungünstig auswirken. Bei dem in der Figur 1 dargestellten Vibrationssensor 1 ist die schädliche Wirkung der Schwingungen der Stromquellen 4 allerdings infolge der spezifischen Anordnung der Stromquellen 4 innerhalb des Gehäuses 2 und relativ zum Schwingungserfassungselement 3 wirksam unterbunden.

Wie in der Figur 2 zu sehen ist, die einen Schnitt durch den Vibrationssensor 1 entlang der in der Figur 1 eingezeichneten gestrichelten Linie zeigt, sind die sechs Stromquellen 4 des Vibrationssensors 1 entlang eines in der Figur 2 gestrichelten Kreises in gleichen Winkelabständen um das Schwingungserfassungselement 3 herum angeordnet. Diese gleichförmige oder symmetrische Verteilung der Stromquellen 4 um das Schwingungserfassungselement 3 herum bedingt insbesondere, dass die Stromquellen 4 nicht über dem Schwingungserfassungselement 3 positioniert sind sondern sich im Inneren des Gehäuses 2 im Wesentlichen mit dem Schwingungserfassungselement 3 auf vergleichbarer oder gleicher Höhe befinden. Letzteres erkennt man in der Figur 1 daran, dass sich ein unterer, der Maschine 12 zugewandter, Endabschnitt jeder Stromquelle 4 mit einem oberen, von der Maschine 12 abgewandten, Endabschnitt des Schwingungserfassungselementes 3 in Normalenrichtung zur Längsachse des Vibrationssensors 1 bzw. des Schwingungserfassungselements 3 überlappen oder miteinander fluchten. Infolgedessen sind die Stromquellen 4 relativ tief innerhalb des Gehäuses 2 angeordnet, so dass sie bei Anlegen des Vibrationssensors 1 an die Maschine 12 oder an ein anderes Messobjekt der Maschine 12 oder dem Messobjekt relativ nahe sind. Somit befindet sich auch der Schwerpunkt der Stromquellen 4 innerhalb des Gehäuses 2 relativ tief und der Maschine 12 oder dem Messobjekt relativ nahe. Ferner ist durch die Anordnung der Stromquellen 4 um das Schwingungserfassungselement 3 die Höhe des Gehäuses 2 geringer als bei bekannten Vibrationssensoren, so dass weniger hohe Schwingamplituden des Gehäuses 2 angeregt werden können und Kippschwingungen des Gehäuses 2 sich weniger stark auswirken. Mithin werden durch die symmetrische Anordnung der Stromquellen 4 oder anderer Komponenten um das Schwingungserfassungselement 3 und die dadurch bedingte tiefe Positionierung ihrer Schwerpunkte innerhalb des Gehäuses 2 Wirkungen diverser quer- und Längseigenmoden der Stromquellen 4 sowie von Kippschwingungen des Gehäuses 2 auf das Messverhalten des Schwingungserfassungselementes 3 effektiv unterdrückt.

Solange die Anordnung der Stromquellen 4 um das Schwingungserfassungselement 3 herum symmetrisch oder gleichförmig ist, stellen sich die oben beschriebenen vorteilhaften Effekte auch bei Vibrationssensoren ein, die mehr als sechs Stromquellen 4 oder die weniger als sechs, jedoch zumindest zwei Stromquellen 4 aufweisen. Daher ist es unerheblich, ob die Anzahl der Stromquellen 4 gerade oder ungerade ist.

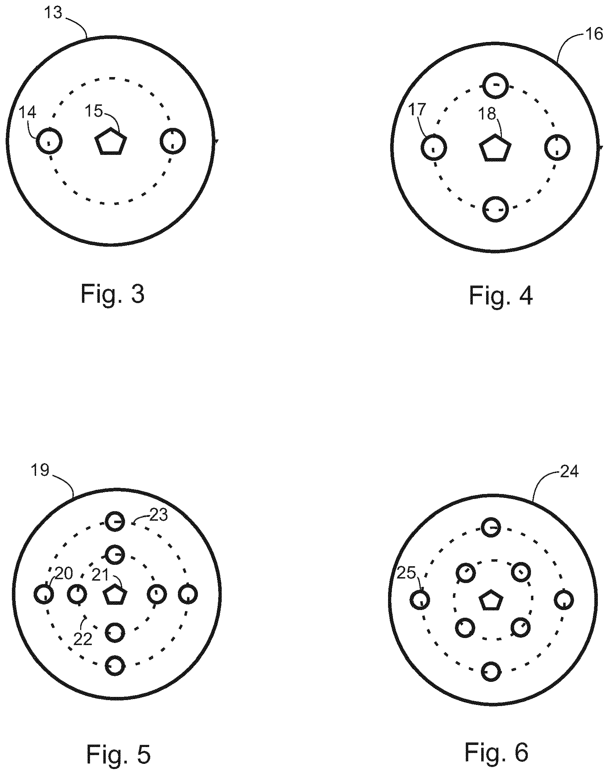

So zeigt die Figur 3 beispielsweise einen Schnitt durch einen Vibrationssensor 13 mit nur zwei Stromquellen 14 und einem mittig angeordneten Schwingungserfassungselement 15. Beide Stromquellen 14 sind einerseits beidseitig des Schwingungserfassungselements 15 mit demselben entlang einer Geraden angeordnet. Zugleich sind die Stromquellen 14 aber auch gleichmäßig mit gleichem Winkelabstand entlang des in der Figur 3 eingezeichneten gestrichelten Kreises verteilt, der jeweils 180° beträgt.

Hingegen ist in der Figur 4 ein Querschnitt durch einen Vibrationssensor 16 mit vier Stromquellen 17 und einem mittigen Schwingungserfassungselement 18 zu sehen. Auch beim Vibrationssensor 16 sind die vier Stromquellen 17 gleichmäßig entlang eines in der Figur 4 gestrichelt eingezeichneten Kreises um das mittige Schwingungserfassungselement 18 herum verteilt. Jedoch beträgt der Winkelabstand zwischen den Stromquellen 17 nunmehr 90°.

Wie anhand der oben beschriebenen Beispiele unschwer zu erkennen ist, beträgt ganz allgemein der Winkelabstand im Falle von n symmetrisch oder gleichmäßig entlang eines Kreise um ein Schwingungserfassungselement herum verteilten Stromquellen 360°/n, wobei n eine ganze Zahl ist, die gleich oder größer als 2 ist. Hierbei ist es unerheblich, ob n eine gerade oder eine ungerade Zahl ist.

In der Figur 5 ist ein Vibrationssensor 19 mit insgesamt acht Stromquellen 20 dargestellt, die um ein mittiges Schwingungserfassungselement 21 herum angeordnet sind. Allerdings sind nunmehr vier Stromquellen mit gleichen Winkelabständen entlang eines inneren Kreises 22 angeordnet während die übrigen vier Stromquellen mit gleichen Winkelabständen entlang eines äußeren Kreises 23 um das mittige Schwingungserfassungselement 21 herum angeordnet sind. Die beiden Kreise 22 und 23 sind zueinander konzentrisch und die Stromquellen 20 derselben sind entlang zweier zueinander orthogonaler Linien positioniert.

Einen Vibrationssensor 24 mit acht Stromquellen 25, die nicht entlang zweier zueinander orthogonaler Linien positioniert sind, ist hingegen in der Figur 6 zu sehen.

Darüber hinaus können Stromquellen von Vibrationssensoren auch entlang von mehr als nur zwei Kreisen angeordnet sein. Ebenso ist es möglich, dass die Anzahl der entlang eines Kreises angeordneten Stromquellen von Kreis zu Kreis verschieden ist. Beispielsweise können entlang eines inneren Kreises vier Stromquellen verteilt sein und entlang eines äußeren Kreises fünf oder sechs Stromquellen.

### Bezugszeichenliste

- 1.: Vibrationssensor
- 2.: Gehäuse
- 3.: Schwingungserfassungselement
- 4.: Stromquelle
- 5.: Leiterplatine
- 6.: Deckel
- 7.: Gummimembran
- 8.: Randabschnitt
- 9.: Ausnehmung
- 10.: Schaumstoff
- 11.: Gewindeabschnitt
- 12.: Maschine
- 13.: Vibrationssensor
- 14.: Stromquelle
- 15.: Schwingungserfassungselement
- 16.: Vibrationssensor
- 17.: Stromquelle
- 18.: Schwingungserfassungselement
- 19.: Vibrationssensor
- 20.: Stromquelle
- 21.: Schwingungserfassungselement
- 22.: innerer Kreis
- 23.: äußerer Kreis
- 24.: Vibrationssensor
- 25.: Stromquelle

## Patentansprüche

1. Vorrichtung (1, 13, 16, 19, 24) zum Erfassen mechanischer Schwingungen von Messobjekten (12), die hierfür an Messobjekten (12) anbringbar ist, mit
einem Gehäuse (2),
wenigstens einem Schwingungserfassungselement (3, 15, 18, 21) und wenigstens zwei Stromquellen (4, 14, 17, 20, 25), wobei
das Schwingungserfassungselement (3, 15, 18, 21) und die Stromquellen (4, 14, 17, 20, 25) innerhalb des Gehäuses (2) angeordnet sind,
**dadurch gekennzeichnet, dass**
die Stromquellen (4, 14, 17, 20, 25) entlang wenigstens eines Kreises (22, 23) um das Schwingungserfassungselement (3, 15, 18, 21) herum angeordnet sind und
Winkelabstände zwischen benachbarten Stromquellen (4, 14, 17, 20, 25) desselben Kreises (22, 23) jeweils gleich sind und weiterhin dadurch, dass sich in Normalenrichtungen zur Längsachse des Schwingungserfassungselements jede der Stromquellen wenigstens teilweise oder abschnittsweise mit dem Schwingungserfassungselement überlappen.

2. Vorrichtung (1, 13, 16, 19, 24) nach Anspruch 1, bei der die Stromquellen (4, 14, 17, 20, 25) und das Gehäuse (2) zueinander kontaktfrei sind.

3. Vorrichtung (1, 13, 16, 19, 24) nach Anspruch 1 oder 2 mit wenigstens einem Dämpfungskörper (10) zur Schwingungsdämpfung der Stromquellen (4, 14, 17, 20, 25).

4. Vorrichtung (1, 13, 16, 19, 24) nach einem der vorhergehenden Ansprüche, bei der das Gehäuse (2) eine Anlagefläche aufweist, mit der die Vorrichtung (1, 13, 16, 19, 24) auf Oberflächen der Messobjekte (12) anlegbar ist.

5. Vorrichtung (1, 13, 16, 19, 24) nach Anspruch 4 mit wenigstens einem Dämpfungselement (7), wobei wenigstens ein Teil der Anlagefläche durch eine Oberfläche des Dämpfungselements (7) gebildet ist.

6. Vorrichtung (1, 13, 16, 19, 24) nach einem der vorhergehenden Ansprüche, bei der das Schwingungserfassungselement (3, 15, 18, 21) mit Messobjekten (12) verbindbar ist.

7. Vorrichtung (1, 13, 16, 19, 24) nach einem der vorhergehenden Ansprüche mit wenigstens einem Dämpfungsmittel (8), das am Schwingungserfassungselement (3, 15, 18, 21) anliegt.

8. Vorrichtung (1, 13, 16, 19, 24) nach einem der vorhergehenden Ansprüche, bei der wenigstens eine der Stromquellen (4, 14, 17, 20, 25) wieder aufladbar und/oder eine Batterie und/oder eine Lithiumbatterie ist.

9. Vorrichtung (1, 13, 16, 19, 24) nach einem der vorhergehenden Ansprüche, bei der das Schwingungserfassungselement (3, 15, 18, 21) wenigstens ein Piezoelement und/oder wenigstens einen MEMS-Schwingungsaufnehmer aufweist.

10. Vorrichtung (1, 13, 16, 19, 24) nach einem der vorhergehenden Ansprüche mit wenigstens einer Datenübertragungsschnittstelle und/oder wenigstens einem Datenspeicher und/oder wenigstens einer Steuereinheit und/oder wenigstens einer Signalverarbeitungseinheit und/oder wenigstens einem Sensor.

## Claims

1. Device (1, 13, 16, 19, 24) for detecting mechanical vibrations of measurement objects (12), able to be attached to measurement objects (12) for this purpose, having
a housing (2),
at least one vibration detection element (3, 15, 18, 21) and
at least two current sources (4, 14, 17, 20, 25), wherein
the vibration detection element (3, 15, 18, 21) and the current sources (4, 14, 17, 20, 25) are arranged inside the housing (2),
**characterized in that**
the current sources (4, 14, 17, 20, 25) are arranged along at least one circle (22, 23) around the vibration detection element (3, 15, 18, 21), and
angular spacings between adjacent current sources (4, 14, 17, 20, 25) on the same circle (22, 23) are each identical, and also **in that** each of the current sources at least partially or sectionally overlaps the vibration detection element in normal directions to the longitudinal axis of the vibration detection element.

2. Device (1, 13, 16, 19, 24) according to Claim 1, in which the current sources (4, 14, 17, 20, 25) and the housing (2) are not in contact with one another.

3. Device (1, 13, 16, 19, 24) according to Claim 1 or 2, having at least one damping body (10) for damping vibrations of the current sources (4, 14, 17, 20, 25).

4. Device (1, 13, 16, 19, 24) according to one of the preceding claims, in which the housing (2) has a bearing surface by way of which the device (1, 13, 16, 19, 24) is able to be placed on surfaces of the measurement objects (12) .

5. Device (1, 13, 16, 19, 24) according to Claim 4, having at least one damping element (7), wherein at least part of the bearing surface is formed by a surface of the damping element (7).

6. Device (1, 13, 16, 19, 24) according to one of the preceding claims, in which the vibration detection element (3, 15, 18, 21) is able to be connected to measurement objects (12).

7. Device (1, 13, 16, 19, 24) according to one of the preceding claims, having at least one damping means (8) that bears on the vibration detection element (3, 15, 18, 21).

8. Device (1, 13, 16, 19, 24) according to one of the preceding claims, in which at least one of the current sources (4, 14, 17, 20, 25) is rechargeable and/or is a battery and/or is a lithium battery.

9. Device (1, 13, 16, 19, 24) according to one of the preceding claims, in which the vibration detection element (3, 15, 18, 21) has at least one piezo element and/or at least one MEMS vibration sensor.

10. Device (1, 13, 16, 19, 24) according to one of the preceding claims, having at least one data transfer interface and/or at least one data memory and/or at least one control unit and/or at least one signal processing unit and/or at least one sensor.

## Revendications

1. Dispositif (1, 13, 16, 19, 24) qui est destiné à détecter des vibrations mécaniques d'objets de mesure (12) et qui peut pour cela être fixé à des objets de mesure (12), ledit dispositif comprenant
un boîtier (2),
au moins un élément de détection de vibrations (3, 15, 18, 21) et
au moins deux sources de courant (4, 14, 17, 20, 25) ,
l'élément de détection de vibrations (3, 15, 18, 21) et les sources de courant (4, 14, 17, 20, 25) étant disposés à l'intérieur du boîtier (2),
**caractérisé en ce que**
les sources de courant (4, 14, 17, 20, 25) sont disposées le long d'au moins un cercle (22, 23) s'étendant autour de l'élément de détection de vibrations (3, 15, 18, 21) et
des distances angulaires entre des sources de courant adjacentes (4, 14, 17, 20, 25) du même cercle (22, 23) sont identiques et en outre **en ce que**
chacune des sources de courant chevauche au moins partiellement ou par portions l'élément de détection de vibrations dans des directions normales à l'axe longitudinal de l'élément de détection de vibrations.

2. Dispositif (1, 13, 16, 19, 24) selon la revendication 1, dans lequel les sources de courant (4, 14, 17, 20, 25) et le boîtier (2) sont sans contact entre eux.

3. Dispositif (1, 13, 16, 19, 24) selon la revendication 1 ou 2 comprenant au moins un corps d'amortissement (10) destiné à amortir les vibrations des sources de courant (4, 14, 17, 20, 25).

4. Dispositif (1, 13, 16, 19, 24) selon l'une des revendications précédentes, dans lequel le boîtier (2) comporte une surface d'application avec laquelle le dispositif (1, 13, 16, 19, 24) peut être appliqué sur des surfaces des objets de mesure (12).

5. Dispositif (1, 13, 16, 19, 24) selon la revendication 4 comprenant au moins un élément d'amortissement (7), au moins une partie de la surface d'application étant formée par une surface de l'élément d'amortissement (7).

6. Dispositif (1, 13, 16, 19, 24) selon l'une des revendications précédentes, dans lequel l'élément de détection de vibrations (3, 15, 18, 21) peut être relié à des objets de mesure (12).

7. Dispositif (1, 13, 16, 19, 24) selon l'une des revendications précédentes comprenant au moins un moyen d'amortissement (8) qui est en appui sur l'élément de détection de vibrations (3, 15, 18, 21).

8. Dispositif (1, 13, 16, 19, 24) selon l'une des revendications précédentes, dans lequel au moins une des sources de courant (4, 14, 17, 20, 25) est rechargeable et/ou est une batterie et/ou une pile au lithium.

9. Dispositif (1, 13, 16, 19, 24) selon l'une des revendications précédentes, dans lequel l'élément de détection de vibrations (3, 15, 18, 21) comporte au moins un élément piézo et/ou au moins un capteur de vibrations MEMS.

10. Dispositif (1, 13, 16, 19, 24) selon l'une des revendications précédentes comprenant au moins une interface de transmission de données et/ou au moins une mémoire de données et/ou au moins une unité de commande et/ou au moins une unité de traitement de signal et/ou au moins un capteur.
